# EUROPÄISCHE PATENTSCHRIFT

(11) **EP 2 532 849 B1**
(45) Veröffentlichungstag und Bekanntmachung des Hinweises auf die Patenterteilung: **16.04.2014**
(21) Anmeldenummer: 12167137.4
(22) Anmeldetag: 08.05.2012
(51) Int. Cl.: F01M 11/02, F16L 5/02, F01M 11/00

(54) **Verbindungselement für Schmiermittel**
Linking element for lubricant
Elément de liaison pour lubrifiant

(30) Priorität: 08.06.2011 EP 11169139
(43) Veröffentlichungstag der Anmeldung: 12.12.2012
(73) Patentinhaber: Wärtsilä Schweiz AG, 8401 Winterthur (CH)
(72) Erfinder: Strödecke, Daniel, 8405 Winterthur (CH)
(74) Vertreter: Intellectual Property Services GmbH

(56) Entgegenhaltungen:
- EP-A1- 0 992 730
- DE-A1- 2 158 203
- DE-A1- 2 449 753
- US-A1- 2002 003 064
- US-A1- 2004 053 546
- US-A1- 2009 013 959
- US-B1- 7 017 546

## Beschreibung

Die Erfindung betrifft ein Verbindungselement für Schmiermittel für einen Kolbenmotor.

Bei grossen Zweitakt- oder auch Viertakt-Motoren wird das Schmiermittel zur Schmierung oder Kühlung in einem Schmiermittelvorratsbehälter gesammelt, der zumeist unterhalb des Motors angeordnet ist. Insbesondere handelt es sich um die Schmierung von Triebwerk und/oder um die Kühlung von Kolben Ein Beispiel für einen derartigen Schmiermittelvorratsbehälter ist beispielsweise in der US2002/0003064 A1 gezeigt. Dieses Dokument betrifft einen Ölüberlauf, welcher in das Kurbelgehäuse rückgeführt wird. Hierdurch kann auf einen Ölsammelraum mit einem Niveau oberhalb des Niveaus des Ölvorratsbehälters verzichtet werden. Der Überlauf ist mit dem Kurbelgehäuse und dem Ölvorratsbehälter verbunden und kann daher den Druck im Ölvorratsbehälter mit dem Druck im Kurbelgehäuse ausgleichen.

Der Schmiermittelvorratsbehälter ist bei diesen Motoren in der Regel nicht Bestandteil des Motors, sondern des Fahrzeuggehäuses. Insbesondere kann es sich bei dem Fahrzeuggehäuse um eine Schiffshülle handeln. Daher wird zwischen dem Motor und dem Schmiermittelvorratsbehälter eine Verbindung vorgesehen, welche durch ein Rohrstück gebildet ist. Ist der Motor in einem Fahrzeug, beispielsweise im Innenraum eines Schiffskörpers angeordnet, kommt es zu Relativbewegungen zwischen dem Schmiermittelvorratsbehälter und dem Motor, wenn der Schmiermitteltank mit dem Fahrzeugkörper verbunden ist.

Der Kolbenmotor ist insbesondere als Grossmotor ausgebildet. Ein derartiger Grossmotor weist eine Mehrzahl von Kolben auf, die einen Durchmesser von mindestens 190 mm aufweisen.

Es ist daher Aufgabe der Erfindung, eine Verbindung zwischen Motorgehäuse und Schmiermittelvorratsbehälter zu schaffen, welche die Relativbewegungen zwischen Motor und Schmiermittelvorratsbehälter ausgleichen kann. Eine weitere Aufgabe der Erfindung ist, eine fluiddichte Verbindung zwischen Motorgehäuse und Schmiermittelvorratsbehälter zu schaffen, für welche ein einfacher Zusammenbau möglich ist. Eine weitere Aufgabe der Erfindung ist es, eine Verbindung zwischen Motorgehäuse und Schmiermittelvorratsbehälter zu schaffen, welche bereits vor dem Einbau des Motors in das Fahrzeuggehäuse, das heisst, vor Festlegung der endgültigen Position des Motors relativ zum Fahrzeuggehäuse verbaut werden kann, das heisst, der Verbau kann zu diesem Zeitpunkt vorbereitet werden, die Fertigstellung erfolgt nach dem Einbau des Motors durch das Einbringen der Dichtmasse.

Die Aufgabe der Erfindung wird durch eine Kolbenmotoranordnung, umfassend ein Motorgehäuse und einen Schmiermittelvorratsbehälter und ein Verbindungselement zur Verbindung des Motorgehäuses mit dem Schmiermittelvorratsbehälter gelöst. Das Verbindungselement weist ein Rohrstück auf, welches ein erstes Ende aufweist, welches fluiddicht mit dem Motorgehäuse verbunden ist. Das Rohrstück kann eine beliebige Querschnittsfläche aufweisen, insbesondere kann das Rohrstück eine kreisförmige Querschnittsfläche aufweisen. Das Rohrstück kann auch trichterförmig ausgebildet sein, insbesondere kann das Rohrstück einen konischen Querschnittsflächenverlauf aufweisen.

Am Schmiermittelvorratsbehälter ist ein Ausgleichselement vorgesehen, um Änderungen des Abstands zwischen Motorgehäuse und Schmiermittelvorratsbehälter zu ermöglichen, die insbesondere beim Zusammenbau entstehen können. Das Ausgleichselement enthält eine Dichtmasse, in welcher ein zweites Ende des Rohrstücks zumindest teilweise aufgenommen ist, sodass eine fluiddichte Verbindung zwischen dem zweiten Ende des Rohrstücks und dem Schmiermittelvorratsbehälter herstellbar ist. Insbesondere ist die Dichtmasse elastisch, sodass Vibrationen, d.h. die Kompensation von Relativbewegungen und/oder Wärmedehnungen zwischen dem Motorgehäuse und dem Schmiermittelvorratsbehälter während des Betriebs des Motors ausgeglichen werden können. Das Rohrstück ist ein starres Element, welches in einer Öffnung im Motorgehäuse aufgenommen ist. Hierzu weist das Rohrstück einen Flansch auf, welcher auf der Öffnung aufliegt und vorzugsweise mit einer Klemmverbindung in der Öffnung gehalten wird. Vorzugweise wird der Flansch zwischen einem Deckelelement und dem Motorgehäuse eingeklemmt. Das Deckelelement kann über eine Schraubverbindung mit dem Motorgehäuse fest verbunden sein. Zwischen dem Motorgehäuse und dem Flansch und/oder zwischen dem Flansch und dem Deckelement kann ein Dichtelement angeordnet sein, sodass der Durchtritt von Schmiermittel durch die Flanschverbindung vermieden werden kann.

In radialer Richtung, also in einer Ebene, die normal zur Mittenachse des Rohrstücks angeordnet ist, kann zwischen dem äusseren Ende des Flansches und dem Deckelelement ein Abstand vorgesehen sein. Hierdurch ist eine radiale Verschiebung des Rohrstücks relativ zum Motorgehäuse ermöglicht. Diese radiale Verschiebung ermöglicht eine Positionierung des Rohrstücks relativ zum Ausgleichselement während der Montage des Ausgleichselements. Durch das Vorsehen dieser Ausgleichsmöglichkeit müssen keine engen Toleranzwerte für die Position des Rohrstücks relativ zur Öffnung in dem Schmiermittelvorratsbehälter bzw. des diese Öffnung umgebenden Rohrelements vorgesehen werden.

Ein zweites Rohrstück kann vorgesehen sein, welches über das Ausgleichselement mit dem ersten Rohrstück verbunden ist. Dieses zweite Rohrstück kann insbesondere die Dichtmasse von der Fluidströmung des aus dem Motorgehäuse ausströmenden Schmiermittels abschirmen, sodass eine Beschädigung der Dichtmasse durch im Schmiermittel vorhandene Feststoffpartikel oder chemisch wirksame Inhaltsstoffe vermieden werden kann. Vorteilhafterweise erstreckt sich das zweite Rohrstück in den Schmiermittelvorratsbehälter. Hierdurch ist eine bessere Kanalisierung der Schmiermittelströmung möglich. Des weiteren erfolgt eine Einströmung unterhalb des üblicherweise zu erwartenden Flüssigkeitsspiegels im Schmiermittelvorratsbehälter. Hierdurch kommt es zu einer Beruhigung der Schmiermittelströmung. Des weiteren wird die Bildung von Blasen oder Schaum im Schmiermittelvorratsbehälter vermieden.

Des weiteren kann der Schmiermittelvorratsbehälter auch die Funktion eines Separators übernehmen. Allfällige mit dem Schmiermittelstrom mitgerissene Feststoffpartikel können im Schmiermittelvorratsbehälter von dem Schmiermittel abgeschieden werden. Derartige unerwünschte Feststoffpartikel, die beispielsweise durch Verbrennungsrückstände vorhanden sein können, welche die Stopfbüchse am Zwischenboden zwischen Zylinderraum und Triebwerksraum passieren, oder durch Abrieb bei der Schmierung der Zylinder des Motors oder auch bei der Schmierung des Triebwerks oder bei der Kühlung entstehen, können somit durch Sedimentation im Schmiermittelvorratsbehälter vom Schmiermittel getrennt werden. Dieses Schmiermittel kann für einen erneuten Einsatz zur Triebwerksschmierung oder Kühlung rezykliert werden und erneut zur Schmierung des Motors eingesetzt werden.

Nach einem Ausführungsbeispiel enthält das Ausgleichselement ein Rohrelement, welches mit der Aussenwand des Schmiermittelvorratsbehälters verbunden ist. Dieses Rohrelement dient der Aufnahme der Dichtmasse. Die Dichtmasse wird im Inneren des Rohrelements gehalten und kann präzise zwischen Rohrelement und dem ersten Rohrstück dosiert werden. Das Rohrelement ist als ein Ringelement ausgebildet. Insbesondere kann dieses Rohrelement einen kreisförmigen Querschnitt aufweisen. Im Unterschied zum ersten und zweiten Rohrstück besteht die Möglichkeit, dass dieses Rohrelement keinen Normdurchmesser aufweist und demzufolge als Ringelement für diesen Zweck eigens angefertigt wird, da für ein Rohrelement mit dem nächstgrösseren Normdurchmesser die Breite des die Dichtmasse enthaltenden Ringkanals zu gross würde. In diesem Fall könnte es abgesehen von einem unerwünschten Mehrbedarf an Dichtmasse auch zu Schwierigkeiten bei der Aushärtung der Dichtmasse kommen. Daher sollte die Breite des Ringkanals möglichst klein gehalten werden. Das heisst, die Breite des Ringkanals liegt innerhalb einer definierten Toleranz, wobei eine minimale Breite vorzusehen ist, um eine ausreichende Flexibilität zur Aufnahme der Relativbewegungen zu gewährleisten, und eine maximale Breite nicht überschritten werden sollte, um Stabilität zu gewährleisten.

Der Schmiermittelvorratsbehälter enthält mindestens eine Öffnung zur Aufnahme von Schmiermittel. Das Ausgleichselement ist um die Öffnung herum angeordnet. Die Dichtmasse kann somit gleichmässig über den gesamten Umfang zwischen Rohrelement und Rohrstück verteilt werden. Hierdurch wird gewährleistet, dass kein Schmiermittel aus dem Schmiermittelvorratsbehälter austreten kann sowie die Verbindung zwischen Motorgehäuse und Schmiermittelvorratsbehälter fluiddicht ist.

Das Rohrelement weist nach einem Ausführungsbeispiel eine Höhe auf, die kleiner als der Abstand zwischen der Aussenwand des Schmiermittelvorratsbehälters und der Aussenwand des Motorgehäuses ist. Hierdurch können installationsbedingte Schwankungen dieses Abstands ausgeglichen werden. Wenn nach einem Ausführungsbeispiel ein zweites Rohrstück vorgesehen ist, ist die Dichtmasse zwischen dem Rohrelement und dem zweiten Rohrstück angeordnet, sodass auch zwischen dem Schmiermittelvorratsbehälter und dem zweiten Rohrstück eine fluiddichte Verbindung gewährleistet ist.

Insbesondere kann das zweite Ende des ersten Rohrstücks zumindest teilweise in die Dichtmasse hineinragen. Nach einem Ausführungsbeispiel beträgt die Eintauchlänge des zweiten Endes zumindest 10% der Höhe der Dichtmasse.

Das zweite Ende kann eine Eintauchlänge aufweisen, die mehr als 50% der Höhe der Dichtmasse beträgt. Nach einem Ausführungsbeispiel enthält die Dichtmasse einen Klebstoff oder eine Schaummasse. Der Klebstoff kann insbesondere ein Zweikomponentenklebstoff sein, der ein Polymer enthalten kann oder einen Klebstoff auf Methacrylat-Basis umfassen. Dieser Klebstoff kann einerseits einfach in die Lücke zwischen Rohrelement und dem bis zur Öffnung im Schmiermittelvorratsbehälter reichenden Wandstück des Schmiermittelvorratsbehälters appliziert werden, andererseits eignet er sich gut für die Verbindung zumindest mit dem zweiten Ende des ersten Rohrstücks.

Vorzugsweise ist der Klebstoff derart beschaffen, dass die Dichtmasse innerhalb von 48 Stunden für eine Durchhärtung bei einer Dicke von maximal 3.5 mm aushärtet, bevorzugt innerhalb von 24 Stunden für eine Durchhärtung bei einer Dicke von maximal 2.5 mm aushärtet. Unter der Dicke ist hier die Dicke der Dichtmasse zu verstehen, also der mit Dichtmasse gefüllte Abstand zwischen dem Rohrstück und dem zweiten Rohrstück gemessen in radialer Richtung. Die Verwendung eines derartigen Klebstoffs als Dichtmasse hat zur Folge, dass Verzögerungen bei der Montage vermieden werden können. Würde anstatt des Klebstoffs beispielsweise ein Silikon als Dichtmasse zum Einsatz kommen, müssten Aushärtzeiten von bis zu einer Woche in Betracht gezogen werden, was zu Verzögerungen bei nachgelagerten Montageschritten führen kann.

Nach einem Ausführungsbeispiel ist der Innendurchmesser des ersten Rohrstücks grösser als der Innendurchmesser des zweiten Rohrstücks. In diesem Fall kann das erste Rohrstück relativ zum zweiten Rohrstück überlappend angeordnet werden.

Nach einem alternativen Ausführungsbeispiel ist der Innendurchmesser des ersten Rohrstücks im Wesentlichen gleich dem Innendurchmesser des zweiten Rohrstücks. In diesem Fall kann das zweite Ende des ersten Rohrstücks an das erste Ende des zweiten Rohrstücks anschliessen. Zwischen den beiden Enden ist ein Abstand vorgesehen, sodass Schwankungen des Abstandes zwischen dem Motorgehäuse und dem Schmiermittelvorratsbehälter im Betriebszustand durch die Dichtmasse ausgeglichen werden können.

Ein besonderer Vorteil der dargestellten Variante liegt darin begründet, dass das Verbindungselement bereits während der Montage der Kolbenmotoranordnung eingebaut werden kann und nicht erst während des Zusammenbaus von Motorgehäuse und Fahrzeuggehäuse. Während des Zusammenbaus von Motorgehäuse und Fahrzeuggehäuse wird das Rohrstück relativ zur Öffnung im Schmiermittelvorratsbehälter am Motorgehäuse ausgerichtet und bevorzugt durch eine Klemmverbindung verbunden. Als abschliessender Arbeitsschritt muss lediglich die Dichtmasse appliziert werden.

Gemäss der bislang eingesetzten Lösung musste das Verbindungselement nach der Motorinstallation entsprechend der vertikalen Position des Kolbenmotors gefertigt werden und anschliessend vom Innenraum des Motorgehäuses aus an die Aussenwand des Schmiermittelvorratsbehälters angeschweisst werden. Diese Montagetätigkeit erfordert einiges Geschick, da die Schweissung durch die Öffnung im Motorgehäuse erfolgen musste. Zudem musste zwischen Motorgehäuse und Verbindungselement im Anschluss ein elastisches Kompensationselement angebracht werden, welches einerseits die Dichtheit der Verbindung zu gewährleisten hat, sodass kein Schmiermittel in das Fahrzeuggehäuse gelangen kann und andererseits Schwingungen und/oder Wärmedehnungen kompensieren soll. Bedingt durch die erforderlichen Arbeitsschritte bei der Herstellung des Rohrstücks im Anschluss an die Installation des Kolbenmotors und dessen Einbau, welche mittels Schweissen erfolgte, war der Einbau zeitaufwändig. Durch die fehlende Zugänglichkeit war der Einbau umständlich und fehleranfällig. Aus diesen Gründen kam es bei der vorbekannten Lösung wiederholt zu einem Versagen des Kompensationselements. Das Kompensationselement wurde üblicherweise mittels Gummimatten mit dem Motorgehäuse verbunden.

Der Kolbenmotor ist insbesondere ein Grossmotor, der vorzugsweise als ein Grossdieselmotor ausgebildet ist, wie er beispielsweise im Schiffbau Verwendung findet. Der Grossdieselmotor kann beispielsweise als 2-Takt Motor oder als 4-Takt Motor ausgeführt sein.

Die Erfindung umfasst des weiteren ein Fahrzeug, umfassend ein Fahrzeuggehäuse und eine Kolbenmotoranordnung nach einem der vorhergehenden Ausführungsbeispiele, wobei das Fahrzeuggehäuse eine Lagerstelle für das Motorgehäuse enthält.

Insbesondere kann der Lagerabstand zwischen dem Fahrzeuggehäuse und dem Motorgehäuse an der Lagerstelle zwischen 10 und 200 mm, bevorzugt zwischen 25 und 85 mm, besonders bevorzugt zwischen 25 und 65 mm betragen. An der Lagerstelle wird ein Lagerelement vorgesehen, auf welchem das Motorgehäuse entsprechend dem endgültigen Lagerabstand ruht.

Der Schmiermittelvorratsbehälter ist im Fahrzeuggehäuse zumindest teilweise aufgenommen und mittels des Ausgleichselements ist der Abstand zwischen dem Schmiermittelvorratsbehälter und dem Motorgehäuse beim Zusammenbau derart anpassbar, dass für jeden Lagerabstand an der Lagerstelle eine fluiddichte Verbindung zwischen Motorgehäuse und Schmiermittelvorratsbehälter herstellbar ist.

Bei dem Fahrzeug kann es sich insbesondere um ein Schiff handeln. Dementsprechend ist das Fahrzeuggehäuse der Schiffsrumpf, in welchem der Grossmotor über die Lagerstelle gelagert ist.

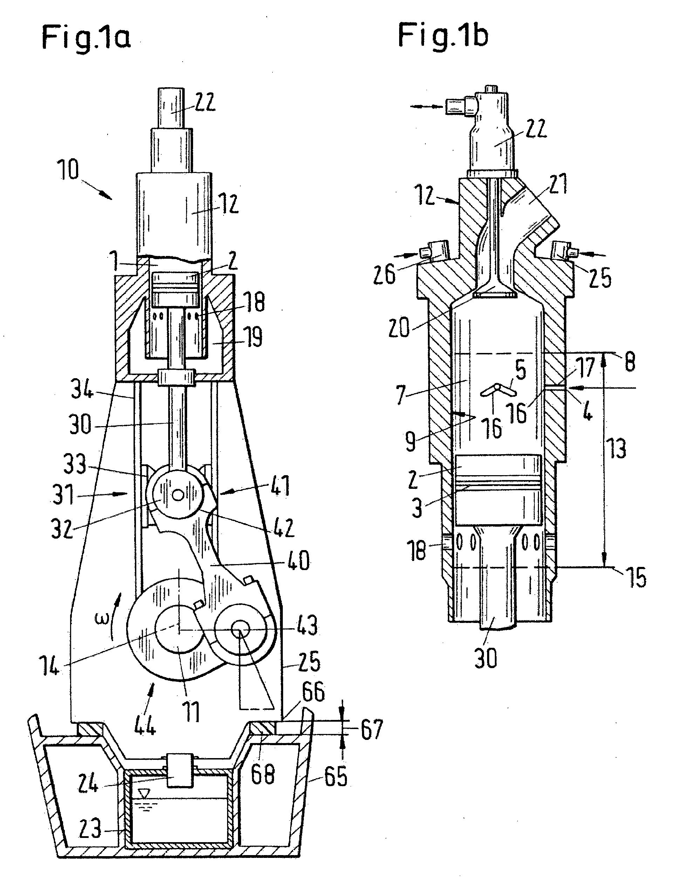

Die Erfindung wird im folgenden anhand der beiliegenden Zeichnungen genauer erläutert. Es zeigen
- Fig. 1a: die Kolbenmotoranordnung enthaltend einen Schmiermittelvorratsbehälter und einen Kolbenmotor,
- Fig. 1 b: ein Detail des Zylinderraums eines Kolbenmotors gemäss Fig. 1a,
- Fig. 2: eine erste Variante eines Verbindungselements zwischen Schmiermittelvorratsbehälter und Motorgehäuse, dargestellt für einen minimalen Abstand zwischen Schmiermittelvorratsbehälter und Motorgehäuse,
- Fig. 3: das Verbindungselement nach Fig. 2, dargestellt für einen maximalen Abstand zwischen Schmiermittelvorratsbehälter und Motorgehäuse,
- Fig. 4: eine zweite Variante eines Verbindungselements zwischen Schmiermittelvorratsbehälter und Motorgehäuse, dargestellt für einen minimalen Abstand zwischen Schmiermittelvorratsbehälter und Motorgehäuse,
- Fig. 5: das Verbindungselement nach Fig. 4, dargestellt für einen maximalen Abstand zwischen Schmiermittelvorratsbehälter und Motorgehäuse

Fig. 1a und Fig. 1b zeigen einen Schnitt durch einen Kolbenmotor, insbesondere einen Grossmotor, der zumeist als Grossdieselmotor ausgeführt ist, der hier beispielsweise als 2-Takt-Motor ausgestaltet ist. Derartige Grossdieselmotoren werden zur Zeit mit Zylindern ausgerüstet, deren Innendurchmesser zumeist grösser als 190 mm ist. Typische Durchmesser liegen zwischen 250 und 1000 mm. Im Inneren des Zylinders 1 bewegt sich ein Kolben 2 hin und her, welcher über eine Kolbenstange 30 und eine Schubsange 40 mit einer drehbaren Kurbelwelle 11 verbunden ist. Die Hin- und Herbewegung des Kolbens erfolgt zwischen einem oberen und unteren Totpunkt.

Der Zylinder 1 und der Kolben 2 schliessen einen Arbeitsraum oder Brennraum ein. Das Volumen des Brennraums ist je nach der Stellung des Kolbens veränderbar. Der Zylinder 1 hat ein Kopfteil 12, welches ein Gaswechselventil 20, einen Abgasauslasskanal 21 und eine Antriebseinheit 22 für das Gaswechselventil 20 enthält. Des Weiteren sind eine Mehrzahl von Einspritzdüsen 25, 26 für Brennstoff am Kopfteil 12 auf der Höhe des Gaswechselventils 20 angeordnet.

An den Kopfteil 12 schliesst der Zylinderkörper an. Der Zylinderkörper enthält den Zylinder oder Zylinderliner mit der Innenwand 9 sowie Spülschlitze 18 im unteren Bereich des Zylinders oder Zylinderliners, die Verbindung zwischen dem Brennraum und einem Zylinderraum 19 herstellen, wenn der Kolben 2 sich in der unteren Totpunktlage oder deren Nähe befindet. Der Zylinderraum umgibt den Zylinderkörper und steht in Verbindung mit der Umgebung, sodass Luft aus der Umgebung in den Zylinderraum gelangen kann.

Fig. 1a und Fig. 1b zeigen den Kolben in einer Position zwischen dem oberen und unteren Totpunkt. Legt man durch den oberen Totpunkt des obersten Kolbenrings eine Schnittebene, welche normal auf die Zylinderachse 14 steht, schneidet die Ebene die Innenwand 9 des Zylinders längs einer Linie, die einen Bereich umrundet, der fortan als obere Totzone 8 bezeichnet werden soll. Die obere Totzone 8 bildet bei vertikaler Anordnung des Zylinders die obere Begrenzung der Gleitfläche 7 aus. Legt man eine gleichartige Schnittebene durch den unteren Totpunkt des untersten Kolbenrings, erhält man in gleicher Weise die untere Totzone 15. Die Länge L (13) bezeichnet den Abstand zwischen oberer Totzone 8 und unterer Totzone 15 und entspricht der Länge der Gleitfläche. Die Gleitflächen können eine Länge von 0.2 m bis ca. 4 m aufweisen. Die Breite der Gleitfläche wird durch den Umfang an der oberen Totzone 8, sowie den Umfang an der unteren Totzone 15 gebildet.

Im Bereich der unteren Totzone wird Luft aus der Umgebung eingebracht, sodass in diesem Bereich Betriebstemperaturen vorherrschen, die sich nicht wesentlich von der Umgebungstemperatur der Luft im Motorraum unterscheiden. Im Bereich der oberen Totzone können jedoch Temperaturen grösser als 300°C vorherrschen. Zwischen dem Brennraum zwischen Zylinderkopf und Kolben und dem Zylinderraum 19 liegt eine Druckdifferenz an. Der höhere Brennraumdruck wirkt auf die dem Brennraum zugewendete Oberfläche des dem Brennraum nächstgelegenen Kolbenrings und presst diesen an die Kolbennut, in welcher der Kolbenring aufgenommen ist. Der Brennraumdruck wirkt auch auf die innere Mantelfläche des Kolbenrings, wodurch der Kolbenring in Richtung der Zylinderinnenwand gedrückt wird. Bei einer Mehrzahl von untereinander angeordneten Kolbenringen erfolgt dieser Vorgang stufenweise, das heisst jeder Kolbenring wird durch die im Brennraum vorherrschenden Druckbedingungen gegen die Innenwand des Zylinders gedrückt. Dies kann eine geeignete Ausbildung eines Schmierfilms behindern. Die Massnahme gegen die unerwünschte Feststoffreibung zwischen Innenwand des Zylinders und Kolbenringen ist das Einbringen eines Schmiermittels, welches die Innenwand 9 des Zylinders 1 im Bereich der Gleitfläche 7 als Schmierfilm überzieht.

Das Schmiermittel wird über die Schmiermittelzufuhr 4 in den Zylinderraum eingespeist. Eine oder mehrere Eintrittsöffnungen 16 für das Schmiermittel können am Umfang des Zylinders verteilt vorgesehen sein. Von den Eintrittsöffnungen ausgehend erstreckt sich ein Kanal 17 bis zur Innenwand 9 des Zylinders, mittels welchem die Förderung und Verteilung des Schmiermittels erfolgt. Das Schmiermittel kann bei vertikaler Ausrichtung des Zylinders die gesamte Gleitfläche 7 unterhalb des Kanals benetzen. Bewegt sich der Kolben 2 in der Expansionsphase an den Eintrittsöffnungen 16 vorbei, wird das Schmiermittel von dem oder den an der Innenwand 9 des Zylinders gleitenden Kolbenringen 3 mit transportiert.

Der Zylinder für einen Kolbenmotor zur Aufnahme eines mit mindestens einem Kolbenring 3 ausgestatteten Kolbens 2 kann eine schlitzförmige Ausnehmung 5 zur Verteilung von Schmiermittel umfassen. Die schlitzförmige Ausnehmung 5 dient als Schmiermitteltasche. Wird Schmiermittel über Eintrittsöffnungen 16 zugeführt, wird es vom Kolbenring 3 erfasst und mit dem Kolbenring 3 mitgeführt und bildet einen Schmiermittelfilm zwischen der Innenwand 9 des Zylinders und dem Kolbenring aus. Ein Teil des Schmiermittels tritt durch den Zwischenraum zwischen Kolbenring 3 und Innenwand 9 aus. Dieser Teil soll allerdings so gering wie möglich sein, da der Kolbenring 3 möglichst dicht an der Innenwand 9 des Zylinders anliegen soll. Wäre dies nicht der Fall, würde das Brennstoff-Gasgemisch, welches sich im Arbeitsraum befinden kann, austreten und zu den Spülschlitzen 18 gelangen. Im Arbeitsraum können Drücke von bis zu 140 bar herrschen. Überschüssiges Schmiermittel im Arbeitsraum fliesst längs der Innenwand 9 des Zylinders ab und gelangt in die schlitzförmige Ausnehmung 5, in welcher sich ein Schmiermittelvorrat ausbildet. Schlitzförmige Ausnehmungen 5, die sich oberhalb einer Eintrittsöffnung 16 für Schmiermittel befinden, werden mit Schmiermittel befüllt, wenn der Kolbenring an der schlitzförmigen Ausnehmung vorbei gleitet. Der Kolbenring transportiert einen Teil des Schmiermittels während seiner Bewegung mit, welches in die schlitzförmige Ausnehmung ausweicht und diese auffüllt, wenn der Kolbenring an einer solchen schlitzförmigen Ausnehmung vorbeikommt.

Insbesondere können die schlitzförmigen Ausnehmungen auch im Bereich der Spülschlitze 18 sowie unterhalb derselben vorgesehen sein. In diesem Bereich wurden in der Vergangenheit ebenfalls Schäden durch Materialverlust festgestellt. Dieser Materialverlust war ebenfalls auf unzureichende, weil ungleichmässige, Schmiermittelversorgung zurückzuführen. Das über die Schmiermittelzufuhr 4 eingebrachte Schmiermittel wird zyklisch zugeführt, das heisst, insbesondere in der in Fig. 1a oder Fig. 1b dargestellten Stellung des Kolbens, da hierbei das Schmiermittel nicht unter hohem Druck gefördert werden muss. Schmiermittel rinnt entlang der Zylinderinnenwand nach unten und wird dann durch die Kolbenringe 3 des Kolbens mitgenommen und verteilt. Ein Teil des Schmiermittels gelangt zwar bis zu den Spülschlitzen 18, kann dort aber nur gespeichert werden, wenn auch im Bereich der Spülschlitze bis zu der unterst möglichen Position des zuunterst liegenden Kolbenrings schlitzförmige Ausnehmungen vorgesehen sind, wenn sich der Kolben im unteren Totpunkt befindet.

An den Zylinderraum 19 schliesst ein Triebwerksraum 31 an. Innerhalb eines Triebwerkraums 31 ist eine vom Kolben 2 ausgehende Kolbenstange 30 angeordnet, die beim Betreiben des Grossmotors über einen Kreuzkopf 32 und eine Schubstange 40 auf eine Kurbelwelle 11 eines Triebwerks einwirkt und dabei eine Kurbelwelle mit einer Winkelgeschwindigkeit dreht. Der Kreuzkopf 32 ist mit Gleitschuhen 33 ausgestattet, welche z. B. entlang Schienen 34 hin und her bewegbar sind. Die Schienen 34 sind ein Ausführungsbeispiel für ortsfest im Triebwerksraum angeordnete Führungselemente. Alternativ kann der Kreuzkopf auch entlang von Zugankern, das heisst langen Schrauben, welche vertikal fast über den ganzen Kolbenmotor reichen, geführt werden.

Wenn der Kolben 2 sich in vertikaler Richtung auf und ab bewegen soll, läuft der Kreuzkopf 32 mit den Gleitschuhen 33 auf den Schienen 34 auf und ab, angetrieben durch den zwischen unterer und oberer Totpunktlage sich bewegenden Kolben 2. Die Kolbenstange 30 endet im Kreuzkopf mit einem Kreuzkopfzapfen 42. An dem Kreuzkopfzapfen ist ein erstes Ende 41 der Schubstange 40 befestigt. Ein zweites Ende 43 der Schubstange 40 ist an einer umlaufenden Kurbel 44 der Kurbelwelle befestigt.

Ein Arbeitshub des Kolbens beginnt, wenn das im Brennraum komprimierte Brennstoff-Luftgemisch zündet oder gezündet wird oder in die heisse komprimierte Luft Brennstoff eingespritzt und gezündet wird oder sich selbst entzündet, sodass dessen explosionsartig verlaufende Verbrennungsreaktion einsetzt. Durch die Energiefreisetzung und den dadurch bedingten Druckanstieg bewegt sich der Kolben entlang der Innenwand 9 des Zylinders weg vom Kopfteil 12, also in der Darstellung der Fig. 1a oder Fig. 1b nach unten. Die mit dem Kolben 2 starr verbundene Kolbenstange 30 und der Kreuzkopfzapfen 42 führen dieselbe Translationsbewegung aus. Der Kreuzkopfzapfen 42 ist über die Gleitschuhe 33 entlang der Schienen 34 geführt. Gleichzeitig wird die Schubstange 40, die an ihrem ersten Ende 41 drehbar auf dem Kreuzkopfzapfen 42 gelagert ist, ausgelenkt und leitet über ihr zweites Ende 43 eine Drehbewegung der Kurbelwelle 11 ein.

Der Arbeitshub ist abgeschlossen, wenn sich der Kolben 2 im unteren Totpunkt befindet. Die Kurbelwelle hat dann eine Drehung von 180° ausgeführt. In dieser Stellung befindet sich das zweite Ende 43 der Schubstange 40 gerade unterhalb der Längsachse der Kurbelwelle 11 und der Gleitschuh 33 in seiner tiefsten Position.

Wenn sich der Kolben dem unteren Totpunkt nähert, wird das Gaswechselventil 20 geöffnet und Frischluft über die Spülschlitze 18 in den Brennraum eingeleitet. Die Verbrennungsgase verlassen den Brennraum über das geöffnete Gaswechselventil 20. Durch die fortwährende Drehung der Kurbelwelle 11 wird die Schubstange 40 und mit ihr die Kolbenstange 30 und der Kolben 2 nach oben bewegt. Wenn der Kolben die Spülschlitze 18 verschliesst, wird das Gaswechselventil 20 geschlossen, sodass die im Brennraum befindliche Luft komprimiert werden kann. Der Kompressionsvorgang wird fortgesetzt, bis der Kolben den oberen Totpunkt erreicht. In dieser Stellung befindet sich das zweite Ende 43 der Schubstange 40 gerade oberhalb der Längsachse der Kurbelwelle 11 und der Gleitschuh 33 in seiner höchsten Position. Etwa zu diesem Zeitpunkt erfolgt das Einspritzen des Brennstoffs in den Brennraum und mit der Zündung wird ein neuer Zyklus eingeleitet.

Dabei ist eine Zylinder- bzw. Kolbenschmierung vorzusehen, damit einerseits der Kolben 2 möglichst leicht, das heisst unbehindert, in dem Zylinder 1 entlang dessen Innenwand 9 gleiten kann, andererseits der Kolben 2 den Brennraum im Zylinder 1 möglichst gut abdichtet, um eine effiziente Umwandlung der beim Verbrennungsprozess freiwerdenden Energie in mechanische Arbeit zu gewährleisten.

Deshalb wird während des Betriebs des Kolbenmotors üblicherweise ein Schmiermittel in den Zylinder 1 eingebracht, um gute Laufeigenschaften des Kolbens entlang der Innenwand des Zylinders 1 zu erzielen und den Verschleiss der Lauffläche, des Kolbens 2 und der Kolbenringe 3 möglichst gering zu halten. Ferner dient das Schmieröl der Neutralisierung aggressiver Verbrennungsprodukte sowie der Vermeidung von Korrosion. Aufgrund dieser zahlreichen Anforderungen werden als Schmiermittel häufig sehr hochwertige und teure Substanzen verwendet.

Das Schmiermittel gelangt vom der Schmierstelle, z.B. dem Triebwerksraum und/oder von Kanälen, die zur Kühlung dienen, in das Kurbelwellengehäuse und von dort aus in den Schmiermittelvorratsbehälter 23, in welchem das gesamte Schmiermittel, welches zur gemeinsamen Anwendung bestimmt ist, gesammelt wird. Der Schmiermittelvorratsbehälter ist über ein Verbindungselement 24 mit dem Motorgehäuse 25, insbesondere dem Kurbelwellengehäuse verbunden.

Der Schmiermittelvorratsbehälter ist somit derart ausgelegt, dass er das gesamte für Kühlung und/oder Schmierung benötigte Schmiermittel für ein Fahrzeug aufnehmen kann. Das Fahrzeug, welches in seiner Gesamtheit nicht zeichnerisch dargestellt ist, umfasst ein Fahrzeuggehäuse 65 und einen Kolbenmotor nach einem der vorhergehenden Ausführungsbeispiele, wobei das Fahrzeuggehäuse 65 eine Lagerstelle 66 für das Motorgehäuse 25 enthält.

Insbesondere kann der Lagerabstand 67 zwischen dem Fahrzeuggehäuse 65 und dem Motorgehäuse 25 an der Lagerstelle 66 zwischen 10 und 200 mm, bevorzugt zwischen 25 und 85 mm, besonders bevorzugt zwischen 25 und 65 mm betragen. An der Lagerstelle 66 wird ein Lagerelement 68 vorgesehen, welches die Einhaltung des gewünschten Lagerabstands 67 gewährleistet.

Der Schmiermittelvorratsbehälter 23 ist im Fahrzeuggehäuse 65 zumindest teilweise aufgenommen und mittels des Ausgleichselements 29 ist der Abstand zwischen dem Schmiermittelvorratsbehälter 23 und dem Motorgehäuse 25 beim Zusammenbau derart anpassbar, dass für jeden Lagerabstand 67 an der Lagerstelle 66 eine fluiddichte Verbindung zwischen Motorgehäuse 25 und Schmiermittelvorratsbehälter 23 herstellbar ist, wobei es Ausführungsbeispiele geben kann, für welche eine Anpassung des Rohrstücks 26 ausserhalb der besonders bevorzugen Bereiche erforderlich sein kann.

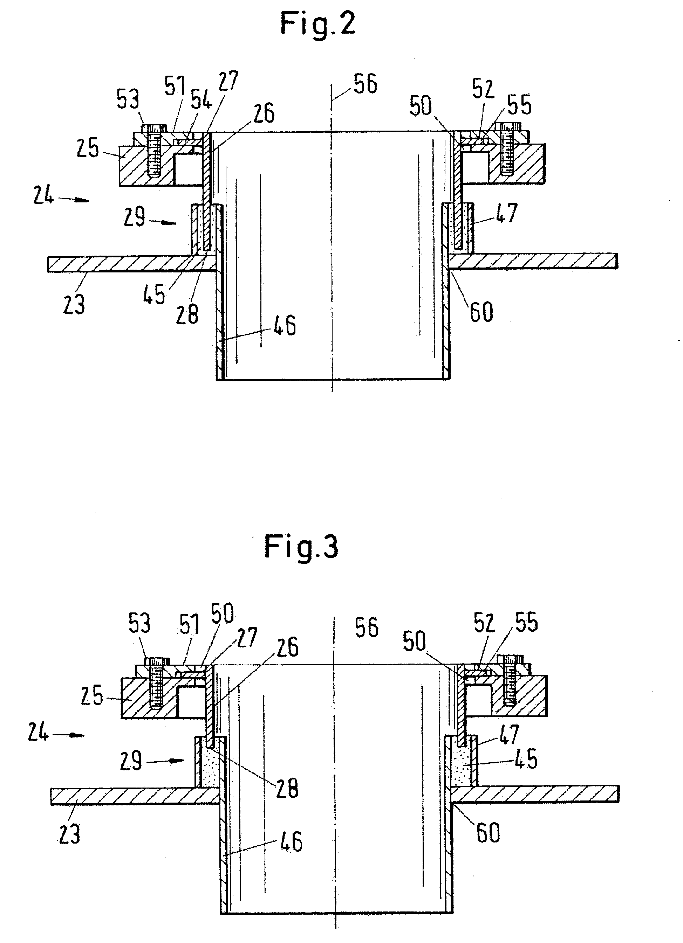

In Fig. 2 ist ein Ausschnitt aus dem Motorgehäuse 25 und dem Schmiermittelvorratsbehälter 23 der Fig. 1a oder Fig. 1b gezeigt. Ein Verbindungselement 24 zur Verbindung des Motorgehäuses mit dem Schmiermittelvorratsbehälter ist vorgesehen. Das Verbindungselement umfasst ein Rohrstück 26, welches ein erstes Ende 27 aufweist, welches fluiddicht mit dem Motorgehäuse 25 verbunden ist. Das Rohrstück 26 kann eine beliebige Querschnittsfläche aufweisen, insbesondere kann das Rohrstück eine kreisförmige Querschnittsfläche aufweisen.

Am Schmiermittelvorratsbehälter 23 ist ein Ausgleichselement 29 vorgesehen, um Änderungen des Abstands zwischen Motorgehäuse und Schmiermittelvorratsbehälter zu ermöglichen, die insbesondere beim Zusammenbau entstehen können. Das Ausgleichselement 29 ist um eine Öffnung 60 im Schmiermittelvorratsbehälter 23 herum angeordnet. Das Ausgleichselement 29 enthält eine Dichtmasse 45, in welcher ein zweites Ende 28 des Rohrstücks 26 zumindest teilweise aufgenommen ist, sodass eine fluiddichte Verbindung zwischen dem zweiten Ende 28 des Rohrstücks 26 und dem Schmiermittelvorratsbehälter 23 herstellbar ist. Insbesondere ist die Dichtmasse 45 elastisch, sodass die Kompensation von Relativbewegungen zwischen dem Motorgehäuse 25 und dem Schmiermittelvorratsbehälter 23 aufgrund von Vibrationen oder Wärmedehnungen ausgeglichen werden können. Der Ausgleich der Wärmedehnungen erfolgt insbesondere auch bei abgestelltem Kolbenmotor aufgrund der Abkühlung desselben.

Das Ausgleichselement 29 enthält ein Rohrelement 47, welches mit der Aussenwand des Schmiermittelvorratsbehälters verbunden ist. Dieses Rohrelement 47 ist ein Ringelement, welches verhindert, dass die Dichtmasse 45 sich unkontrolliert über die Aussenwand des Schmiermittelvorratsbehälters verteilt. Die Dichtmasse ist beim Zusammenbau noch flüssig oder zumindest fliessfähig. Das Rohrelement 47 und das zweite Rohrstück 46 begrenzen somit einen offenen ringförmigen Kanal, welcher die Dichtmasse enthält. Das zweite Ende 28 des Rohrstücks 26 kann in die Dichtmasse eintauchen. Die Eintauchtiefe des zweiten Endes 28 in die Dichtmasse ist abhängig vom Lagerabstand 67 zwischen Fahrzeuggehäuse 65 (siehe Fig. 1a) und Motorgehäuse 25 und kann zwischen der in Fig. 2 dargestellten maximalen Eintauchtiefe und der in Fig. 3 dargestellten minimalen Eintauchtiefe variieren. Das Rohrelement 47 hat eine Höhe, die kleiner als der Abstand zwischen der Aussenwand des Schmiermittelvorratsbehälters 23 und der Aussenwand des Motorgehäuses 25 ist.

Das Rohrstück 26 ist ein starres Element, welches in einer Öffnung 50 im Motorgehäuse aufgenommen ist. Hierzu weist das Rohrstück 26 einen Flansch 52 auf, welcher auf der Öffnung 50 aufliegt und vorzugsweise mit einer Klemmverbindung in der Öffnung gehalten wird. Der Flansch 52 wird zudem zwischen einem Deckelelement 51 und dem Motorgehäuse eingeklemmt. Das Deckelelement 51 ist über eine Schraubverbindung 53 mit dem Motorgehäuse fest verbunden. Zwischen dem Motorgehäuse und dem Flansch und/oder zwischen dem Flansch und dem Deckelement kann ein Dichtelement 54 angeordnet sein, sodass der Durchtritt von Schmiermittel durch die Flanschverbindung, das heisst insbesondere durch die Schraubverbindung 53 oder zwischen dem Flansch 52 und dem Deckelelement 51 vermieden werden kann.

In radialer Richtung, also in einer Ebene, die normal zur Mittenachse 56 des Rohrstücks 26 angeordnet ist, kann zwischen dem äusseren Ende 55 des Flansches 52 und dem Deckelelement 51 ein Abstand vorgesehen sein. Hierdurch wird eine radiale Verschiebung des Rohrstücks 26 relativ zum Motorgehäuse 25 ermöglicht. Diese radiale Verschiebung ermöglicht eine Positionierung des Rohrstücks 26 relativ zum Ausgleichselement 29 während der Montage des Ausgleichselements. Hierdurch wird die Toleranz für die Installation in radialer Ebene, die in der Fig. 2 in horizontaler Richtung verläuft, vergrössert.

Als alternatives Ausführungsbeispiel kann vorgesehen werden, den Flansch 52 direkt mit dem Motorgehäuse 25 zu verbinden, bevorzugt durch eine Schraubverbindung.

Ein zweites Rohrstück 46 ist vorgesehen, welches über das Ausgleichselement 29 mit dem ersten Rohrstück 26 verbunden ist. Das zweite Rohrstück 46 erstreckt sich in den Schmiermittelvorratsbehälter 23 hinein. Dieses zweite Rohrstück 46 kann insbesondere die Dichtmasse 45 von der Fluidströmung des aus dem Motorgehäuse ausströmenden Schmiermittels abschirmen, sodass eine Beschädigung der Dichtmasse durch im Schmiermittel vorhandene Feststoffpartikel oder chemisch wirksame Inhaltsstoffe vermieden werden kann. Vorteilhafterweise erstreckt sich das zweite Rohrstück 45 in den Schmiermittelvorratsbehälter 23 hinein.

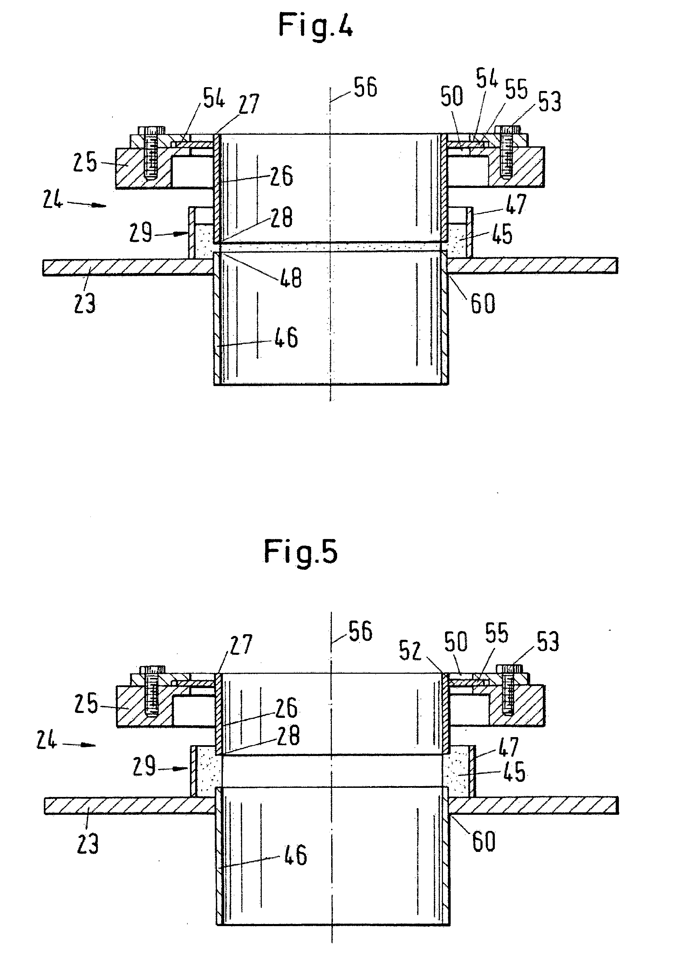

Fig. 3 zeigt das Verbindungselement 24 nach Fig. 2 für den maximalen Abstand zwischen Schmiermittelvorratsbehälter 23 und Motorgehäuse 25, wobei gleiche Teile auch die gleichen Bezugszeichen tragen und nachfolgend nur auf die Unterschiede zu dem in Fig. 2 dargestellten Ausführungsbeispiel beschrieben werden sollen, was im übrigen auch für Fig. 4 und Fig. 5 gilt. Das zweite Ende des Rohrstücks 26 ragt dementsprechend weniger weit in die Dichtmasse 45 als im Ausführungsbeispiel gemäss Fig. 2, sodass die für die Montage erforderlichen Toleranzen eingehalten werden können und ein Einbau für den minimalen Abstand zwischen Motorgehäuse 25 und Schmiermittelvorratsbehälter 23 gemäss Fig. 2 bzw. den maximalen Abstand zwischen Motorgehäuse und Schmiermittelvorratsbehälter gemäss Fig. 3 ermöglicht ist.

Fig. 4 zeigt eine zweite Variante eines Verbindungselements 24 zwischen Schmiermittelvorratsbehälter 23 und Motorgehäuse 25. Gemäss dieses Ausführungsbeispiels ist der Innendurchmesser des ersten Rohrstücks 26 gleich gross wie der Innendurchmesser des Rohrstücks 46. Gemäss Fig. 4 ist das erste Rohrstück 26 oberhalb des zweiten Rohrstücks 46 angeordnet. Die beiden Rohrstücke stossen aber nicht aufeinander, sondern das zweite Ende 28 des ersten Rohrstücks ist in einem Abstand vom ersten Ende 48 des zweiten Rohrstücks 46 angeordnet. Zwischen dem ersten Ende 48 und dem zweiten Ende 28 befindet sich Dichtmasse.

Fig. 5 zeigt das Verbindungselement 24 zwischen Schmiermittelvorratsbehälter 23 und Motorgehäuse 25 gemäss Fig. 4. Im Unterschied zu Fig. 4 besteht zwischen dem ersten Ende 48 des zweiten Rohrstücks 46 und dem zweiten Ende 28 des ersten Rohrstücks 25 ein grösserer Abstand als in Fig. 4, nämlich der maximal mögliche Abstand, um die Toleranzen für die Montage von Motorgehäuse 25 und Schmiermittelvorratsbehälter 23 einhalten zu können.

Selbstverständlich ist es auch möglich, das zweite Rohrstück 46 wegzulassen, da auch eine fluiddichte Verbindung zwischen dem Rohrelement 47 und dem Rohrstück 26 herstellbar ist, indem die Dichtmasse zwischen dem Rohrelement 47 und dem Rohrstück 26 eingetragen wird.

Selbstverständlich ist die Erfindung nicht als auf die genannten Ausführungsbeispiele beschränkt anzusehen und der Gegenstand der Erfindung umfasst auch Kolbenmotoren, insbesondere Grossmotoren.

## Patentansprüche

1. Kolbenmotoranordnung, umfassend ein Motorgehäuse (25) und einen Schmiermittelvorratsbehälter (23) und ein Verbindungselement (24) zur Verbindung des Motorgehäuses mit dem Schmiermittelvorratsbehälter, wobei das Verbindungselement ein Rohrstück (26) aufweist, welches ein erstes Ende (27) aufweist, welches fluiddicht mit dem Motorgehäuse verbunden ist, wobei am Schmiermittelvorratsbehälter ein Ausgleichselement (29) vorgesehen ist, um Änderungen des Abstands zwischen Motorgehäuse und Schmiermittelvorratsbehälter beim Zusammenbau zu ermöglichen, **dadurch gekennzeichnet, dass** das Ausgleichselement eine Dichtmasse (45) enthält, in welcher ein zweites Ende (28) des Rohrstücks zumindest teilweise aufgenommen ist, sodass eine fluiddichte Verbindung zwischen dem zweiten Ende des Rohrstücks und dem Schmiermittelvorratsbehälter herstellbar ist.

2. Kolbenmotoranordnung nach Anspruch 1, wobei ein zweites Rohrstück (46) vorgesehen ist, welches über das Ausgleichselement (29) mit dem ersten Rohrstück (26) verbunden ist.

3. Kolbenmotoranordnung nach Anspruch 2, wobei sich das zweite Rohrstück (46) in den Schmiermittelvorratsbehälter (23) hinein erstreckt.

4. Kolbenmotoranordnung nach einem der vorhergehenden Ansprüche, wobei das Ausgleichselement (29) ein Rohrelement (47) enthält, welches mit der Aussenwand des Schmiermittelvorratsbehälters verbunden ist.

5. Kolbenmotoranordnung nach einem der vorhergehenden Ansprüche, wobei das Ausgleichselement (29) um eine Öffnung (60) im Schmiermittelvorratsbehälter (23) herum angeordnet ist.

6. Kolbenmotoranordnung nach einem der vorhergehenden Ansprüche 4 oder 5, wobei das Rohrelement (47) eine Höhe aufweist, die kleiner ist als der Abstand zwischen der Aussenwand des Schmiermittelvorratsbehälters und der Aussenwand des Motorgehäuses.

7. Kolbenmotoranordnung nach einem der vorhergehenden Ansprüche, wobei die Dichtmasse zwischen dem Rohrelement und dem zweiten Rohrstück angeordnet ist.

8. Kolbenmotoranordnung nach einem der vorhergehenden Ansprüche, wobei das zweite Ende des ersten Rohrstücks zumindest teilweise in die Dichtmasse hineinragt.

9. Kolbenmotoranordnung nach einem der vorhergehenden Ansprüche, wobei die Dichtmasse einen Klebstoff enthält, insbesondere einen Zweikomponentenklebstoff enthält, der ein Polymer oder einen Klebstoff auf Methacrylat-Basis enthalten kann.

10. Kolbenmotoranordnung nach einem der vorhergehenden Ansprüche, wobei die Dichtmasse innerhalb von 48 Stunden für eine Durchhärtung bei einer Dicke von maximal 3.5 mm aushärtet, bevorzugt innerhalb von 24 Stunden für eine Durchhärtung bei einer Dicke von maximal 2.5 mm aushärtet.

11. Kolbenmotoranordnung nach einem der vorhergehenden Ansprüche, wobei der Innendurchmesser des ersten Rohrstücks grösser als der Innendurchmesser des zweiten Rohrstücks ist.

12. Kolbenmotoranordnung nach einem der vorhergehenden Ansprüche 1 bis 10, wobei der Innendurchmesser des ersten Rohrstücks im Wesentlichen gleich dem Innendurchmesser des zweiten Rohrstücks ist.

13. Fahrzeug, umfassend ein Fahrzeuggehäuse (65) und eine Kolbenmotoranordnung nach einem der vorhergehenden Ansprüche, wobei das Fahrzeuggehäuse eine Lagerstelle (66) für das Motorgehäuse (25) enthält.

14. Fahrzeug nach Anspruch 13, wobei der Lagerabstand (67) zwischen dem Fahrzeuggehäuse (65) und dem Motorgehäuse (25) an der Lagerstelle zwischen 10 und 200 mm, bevorzugt zwischen 25 und 85 mm, besonders bevorzugt zwischen 25 und 65 mm beträgt.

15. Fahrzeug nach Anspruch 14, wobei der Schmiermittelvorratsbehälter (23) zumindest teilweise im Fahrzeuggehäuse (65) aufgenommen ist und mittels des Ausgleichselements (29) der Abstand zwischen dem Schmiermittelvorratsbehälter (23) und dem Motorgehäuse (25) beim Zusammenbau derart anpassbar ist, dass für jeden Lagerabstand (67) an der Lagerstelle (66) eine fluiddichte Verbindung zwischen Motorgehäuse (25) und Schmiermittelvorratsbehälter (23) herstellbar ist.

## Claims

1. A piston engine arrangement including an engine housing (25) and a lubricant storage tank (23) and a connection element (24) for connecting the engine housing to the lubricant storage tank, wherein the connection element has a pipe piece (26) which has a first end (27) which is connected in a fluid-tight manner to the engine housing, wherein a compensation element (29) is provided at the lubricant storage tank to enable changes in the spacing between the engine housing and the lubricant storage tank on the assembly, **characterized in that** the compensation element contains a sealant (45) in which a second end (28) of the pipe piece is at least partly received so that a fluid-tight connection can be established between the second end of the pipe piece and the lubricant storage tank.

2. A piston engine arrangement in accordance with claim 1, wherein a second pipe piece (46) is provided which is connected to the first pipe piece (26) via the compensation element (29).

3. A piston engine arrangement in accordance with claim 2, wherein the second pipe piece (46) extends into the lubricant storage tank (23).

4. A piston engine arrangement in accordance with any one of the preceding claims, wherein the compensation element (29) contains a pipe element (47) which is connected to the outer wall of the lubricant storage tank.

5. A piston engine arrangement in accordance with any one of the preceding claims, wherein the compensation element (29) is arranged around an opening (60) in the lubricant storage tank (23).

6. A piston engine arrangement in accordance with one of the preceding claims 4 or 5, wherein the pipe element (47) has a height which is less than the spacing between the outer wall of the lubricant storage tank and the outer wall of the engine housing.

7. A piston engine arrangement in accordance with any one of the preceding claims, wherein the sealant is arranged between the pipe element and the second pipe piece.

8. A piston engine arrangement in accordance with any one of the preceding claims, wherein the second end of the first pipe piece projects at least partly into the sealant.

9. A piston engine arrangement in accordance with any one of the preceding claims, wherein the sealant contains an adhesive, in particular a two-component adhesive, which can contain a polymer or a methacrylate based adhesive.

10. A piston engine arrangement in accordance with any one of the preceding claims, wherein the sealant hardens within 48 hours for a full hardening at a thickness of a maximum of 3.5 mm, preferably within 24 hours for a full hardening at a thickness of a maximum of 2.5 mm.

11. A piston engine arrangement in accordance with any one of the preceding claims, wherein the inner diameter of the first pipe piece is larger than the inner diameter of the second pipe piece.

12. A piston engine arrangement in accordance with any one of the preceding claims 1 to 10, wherein the inner diameter of the first pipe piece is substantially equal to the inner diameter of the second pipe piece.

13. A vehicle including a vehicle housing (65) and a piston engine arrangement in accordance with any one of the preceding claims, wherein the vehicle housing contains a support point (66) for the engine housing (25).

14. A vehicle in accordance with claim 13, wherein the support spacing (67) between the vehicle housing (65) and the engine housing (25) at the support point can amount to between 10 and 200 mm, preferably between 25 and 85 mm, particularly preferably between 25 and 65 mm.

15. A vehicle in accordance with claim 14, wherein the lubricant storage tank (23) is received at least partly in the vehicle housing (65) and the spacing between the lubricant storage tank (23) and the engine housing (25) can be adapted by means of the compensation element (29) during the assembly such that a fluid-tight connection can be established between the engine housing (25) and the lubricant storage tank (23) for every support spacing (67) at the support point (66).

## Revendications

1. Agencement de moteur à pistons, comprenant un logement de moteur (25) et un réservoir de stockage de lubrifiant (23) et un élément de jonction (24) destiné à relier le logement du moteur au réservoir de stockage de lubrifiant, étant entendu que l'élément de jonction présente une pièce tubulaire (26) qui présente une première extrémité (27) qui est reliée de façon étanche aux fluides avec le logement du moteur, étant entendu qu'un élément de compensation (29) est prévu sur le réservoir de stockage de lubrifiant afin de permettre des modifications de la distance entre le logement du moteur et le réservoir de stockage de lubrifiant lors de l'assemblage, **caractérisé en ce que** l'élément de compensation contient un matériau de joint (45) dans lequel une deuxième extrémité (28) de la pièce tubulaire est reçue au moins partiellement de telle sorte qu'une jonction étanche aux fluides peut être réalisée entre la deuxième extrémité de la pièce tubulaire et le réservoir de stockage de lubrifiant.

2. Agencement de moteur à pistons selon la revendication 1, dans lequel il est prévu une deuxième pièce tubulaire (46), qui est reliée avec la première pièce tubulaire (26) par le biais de l'élément de compensation (29).

3. Agencement de moteur à pistons selon la revendication 2, dans lequel la deuxième pièce tubulaire (46) s'étend à l'intérieur du réservoir de stockage de lubrifiant (23).

4. Agencement de moteur à pistons selon l'une des revendications précédentes, dans lequel l'élément de compensation (29) contient un élément tubulaire (47) qui est relié avec la paroi extérieure du réservoir de stockage de lubrifiant.

5. Agencement de moteur à pistons selon l'une des revendications précédentes, dans lequel l'élément de compensation (29) est agencé autour d'une ouverture (60) dans le réservoir de stockage de lubrifiant (23).

6. Agencement de moteur à pistons selon l'une des revendications 4 ou 5 précédentes, dans lequel l'élément tubulaire (47) présente une hauteur qui est plus petite que la distance entre la paroi extérieure du réservoir de stockage de lubrifiant et la paroi extérieure du logement du moteur.

7. Agencement de moteur à pistons selon l'une des revendications précédentes, dans lequel le matériau de joint est agencé entre l'élément tubulaire et la deuxième pièce tubulaire.

8. Agencement de moteur à pistons selon l'une des revendications précédentes, dans lequel la deuxième extrémité de la première pièce tubulaire pénètre au moins partiellement dans le matériau de joint.

9. Agencement de moteur à pistons selon l'une des revendications précédentes, dans lequel le matériau de joint contient une colle, en particulier une colle de mélange, qui peut contenir un polymère ou une colle à base de méthacrylate.

10. Agencement de moteur à pistons selon l'une des revendications précédentes, dans lequel le matériau de joint durcit en l'espace de 48 heures pour une dureté à coeur avec une épaisseur maximale de 3,5 mm, et de préférence en l'espace de 24 heures pour une dureté à coeur avec une épaisseur maximale de 2,5 mm.

11. Agencement de moteur à pistons selon l'une des revendications précédentes, dans lequel le diamètre intérieur de la première pièce tubulaire est plus grand que le diamètre intérieur de la deuxième pièce tubulaire.

12. Agencement de moteur à pistons selon l'une des revendications 1 à 10 précédentes, dans lequel le diamètre intérieur de la première pièce tubulaire est essentiellement identique au diamètre intérieur de la deuxième pièce tubulaire.

13. Véhicule comprenant un châssis de véhicule (65) et un agencement de moteur à pistons selon l'une des revendications précédentes, dans lequel le châssis de véhicule contient un palier (66) pour le logement du moteur (25).

14. Véhicule selon la revendication 13, dans lequel l'écartement (67) entre le châssis du véhicule (65) et le logement du moteur (25) au niveau du palier est compris entre 10 et 200 mm, de préférence entre 25 et 85 mm, et particulièrement de préférence entre 25 et 65 mm.

15. Véhicule selon la revendication 14, dans lequel le réservoir de stockage de lubrifiant (23) est logé au moins partiellement dans le châssis du véhicule (65) et la distance entre le réservoir de stockage de lubrifiant (23) et le logement du moteur (25) peut être adaptée au moyen de l'élément de compensation (29) lors de l'assemblage de telle sorte qu'une jonction étanche aux fluides peut être réalisée entre le logement du moteur (25) et le réservoir de stockage de lubrifiant (23) pour chaque écartement (67) au niveau du palier (66).
